**Europäisches Patentamt**

**European Patent Office**

**Office européen des brevets**

(11) Veröffentlichungsnummer: **0 171 813**

**B1**

(12) **EUROPÄISCHE PATENTSCHRIFT**

(45) Veröffentlichungstag der Patentschrift:
27.04.88

(21) Anmeldenummer: **85110236.8**

(22) Anmeldetag: **15.08.85**

(51) Int. Cl.⁴: **F 16 B  12/26,** A 47 B  95/00

(54) Aufschiebebeschlag.

(30) Priorität: **16.08.84  DE 3430068**

(43) Veröffentlichungstag der Anmeldung:
**19.02.86 Patentblatt 86/8**

(45) Bekanntmachung des Hinweises auf die Patenterteilung:
**27.04.88 Patentblatt 88/17**

(84) Benannte Vertragsstaaten:
**AT BE CH FR GB IT LI NL SE**

(56) Entgegenhaltungen:
**DE-A-2 244 499**
**DE-A-2 611 754**
**US-A-3 675 293**

(73) Patentinhaber: **Kusanke, Karl- Ernst, Im Wiesental 33 - 35, D-5880 Lüdenscheid- Eggenscheid (DE)**

(72) Erfinder: **Kusanke, Karl- Ernst, Im Wiesental 33 - 35, D-5880 Lüdenscheid- Eggenscheid (DE)**

(74) Vertreter: **Hassler, Werner, Dr., Postfach 17 04 Asenberg 62, D-5880 Lüdenscheid (DE)**

LIBER, STOCKHOLM 1988

EP 0 171 813 B1

## Beschreibung

Die Erfindung betrifft einen Aufschiebebeschlag zur Befestigung von Blenden und anderen Vorsatzelementen an Rahmenteilen oder Korpusteilen, wobei an dem Rahmen- oder Korpusteil ein erster Beschlagteil eine an einer Tragplatte angeordnete Zunge mit einer Rastnase in einer Eingriffsfläche und an der Blende oder dem Vorsatzelement ein zweiter Beschlagteil eine ebenfalls an einer Tragplatte angeordnete Führungsrinne mit einer an die Eingriffsfläche des ersten Beschlagteils angepaßten Rastkante aufweist, wobei die Seitenwände der Führungsrinne in Einschubrichtung geneigt zueinander verlaufen und die im Befestigungszustand hieran anliegenden Seitenränder der Zunge eine entsprechende Neigung aufweisen.

Die wieder lösbare, paßgenaue Befestigung und Halterung von Blenden ist schwierig. Denn die betreffenden Beschläge sollen selbstverständlich unsichtbar bleiben, damit die Vorderfront der Blende nicht beeinträchtigt wird.

Ein Aufschiebebeschlag der eingangs genannten Art ist in der DE-A-2 611 754 beschrieben. Dort ist nur in einer Richtung senkrecht zur Aufschieberichtung eine Fügung gegeben. Außerdem ist der Beschlag nicht durch Herausziehen lösbar.

Aufgabe der Erfindung ist eine solche Ausbildung des Aufschiebeschlages, daß eine Fügung in zwei zueinander senkrechten Richtungen und eine Lösbarkeit durch Herausziehen erzielt ist.

Diese Aufgabe wird nach der Erfindung dadurch gelöst, daß die Rastkante des zweiten Beschlagteils an der zwischen den Seitenwänden gelegenen Fußwandung der Führungsrinne vorgesehen ist und dadurch die Zunge mit der Fußwandung verrastbar ist, wobei die Rastkante und die Rastnase zur Lösbarkeit der Verbindung ein in Einschubrichtung geneigt verlaufendes Profil aufweisen, und daß die Zunge gegenüber der Befestigungsseite der Tragplatte des ersten Beschlagteils um die Dicke der Fußwandung der Führungsrinne des zweiten Beschlagteils versetzt ist, so daß die Fußwandung der Führungsrinne im Befestigungszustand zwischen der Zunge und dem Rahmenteil gehaltert ist.

Die Erfindung unterscheidet sich insofern vom Stand der Technik, als die Beschlagteile eine Zentrierung der Blende beim Eindrücken bewirken, so daß der Aufschiebebeschlag immer sicher arbeitet. Es ergibt sich eine genaue Fügung in zwei zueinander und zur Aufschieberichtung senkrechten Richtungen. Der gegenseitige Eingriff der Beschlagteile bringt eine Stabilisierung für den Rahmen, so daß derselbe durch die Blende ausgesteift wird. Die Ausbildung der Rastung sichert eine Schnappwirkung beim Aufschieben und eine klemmende Festhaltung sowie eine Lösbarkeit durch Herausziehen. Der Aufschiebebeschlag eignet sich besonders zur Befestigung von Zierbekleidungen an einem Türfutter. Die Verrastung in den Fußwandungen ist unabhängig von der Führung durch die Seitenwände. So ist die Fußwand der Rinne klemmend unter der Zungen festgehalten. Dadurch wird die Lösbarkeit unter Beibehaltung der sicheren Fügung erreicht.

Nach einer Ausführungsform der Erfindung sind die Tragplatten der Beschlagteile jeweils in Längsrichtung der Zunge bzw. in Achsrichtung der Führungsrinne vorgesehen. Bei dieser Ausführungsform verlaufen die Tragplatten jeweils senkrecht zur Längskante der Blende und der Rahmenteile.

Nach einer abgewandelten Ausführungsform der Erfindung sind die Tragplatten der Beschlagteile jewerls quer zur Längsrichtung der Zunge bzw. quer zur Achse der Führungsrinne angeordnet. Die Tragplatten können dabei in üblichen Rasterbohrungen befestigt werden.

Damit die Führungsrinne eine erhöhte Verkantungsstabilität hat, sieht die Erfindung vor, daß die Seitenwände der Führungsrinne bis zur Tragplatte verlängert sind.

Damit die Beschlagteile in einfacher Werse an den Bauelementen befestigt werden können, sieht die Erfindung vor, daß die Tragplatten jeweils zwei Durchgänge in einem üblichen Rasterabstand aufweisen.

Nach einer Ausführungsform der Erfindung ist vorgesehen, daß die Durchgänge jeweils ein Profil zur Aufnahme eines Versenkkopfes einer Holzspanplattenschraube aufweisen.

Nach einer abgewandelten Ausführungsform der Erfindung ist vorgesehen, daß die Durchgänge jeweils ein Profil zur Aufnahme einer Schraube mit einem zylindrischen Schaft aufweisen. Durch diese unterschiedliche Ausbildung der Durchgänge kann man den Beschlag für unterschiedliche Befestigungsarten vorsehen.

Ausführungsformen der Erfindung sind im folgenden unter Bezugnahme auf die anliegenden Zeichnungen erläuert, in denen darstellen:

Fig. 1 eine perspektivische Ansicht der Anordnung von Aufschiebebeschlägen nach einer ersten Ausführungsform der Erfindung,

Fig. 2 eine Draufsicht auf das eine Beschlagteil dieses Aufschiebebeschlags,

Fig. 3 eine Seitenansicht zu Fig. 2,

Fig. 4 eine Draufsicht auf das andere Beschlagteil,

Fig. 5 eine Seitenansicht zu Fig. 4,

Fig. 6 eine perspektivische Ansicht einer Beschlagteil für diese Ausführungsform der Erfindung,

Fig. 7 eine Draufsicht auf das eine Beschlagteil für diese Ausführungsform der Erfindung,

Fig. 8 eine Seitenansicht zu Fig. 7,

Fig. 9 eine Draufsicht auf das andere Beschlagteil und

Fig. 10 eine Seitenansicht zu Fig. 9.

Der Aufschiebebeschlag nach der Erfindung umfaßt zwei Beschlagteile 1 und 2. Das Beschlagteil 1 weist eine Tragplatte 3 mit zwei Durchgängen 4, 5 für Befestigungsschrauben auf. Die Durchgänge 4 und 5 können jeweils entsprechend der anzubringenden Schrauben verschieden ausgebildet sein. Der Durchgang 4 hat ein zylindrisches Profil entsprechend einer Schraube mit einem zylindrischen Schaft und einem Halbrundkopf. Der Durchgang 5 hat ein Profil zur Aufnahme einer Holzspanplattenschraube. An die Tragplatte ist eine Zunge 6 angesetzt, die gegenüber der Auflagefläche der Tragplatte 3 abgesetzt ist. Die Zunge weist an ihrer Eingriffsfläche 7 eine Rastnase 8 mit einem geneigt ausgebildeten Profil auf. Die Zunge 6 hängt mit der Tragplatte 3 über Verstärkungsrippen 9 zusammen. Die Seitenränder 10 der Zunge verlaufen gegen das Zungenende hin geneigt gegeneinander.

Das andere Beschlagteil 2 weist ebenfalls eine Tragplatte 11 mit zwei Durchgänge 12 und 13 auf, die ebenso wie die Durchgänge 4 und 5 unterschiedlich profiliert sein können. An der Tragplatte 1 sitzt rechtwinklig abgebogen ein Schenkel 14, an dem eine Führungsrinne 21 geformt ist. Die Fußwand 15 der Führungsrinne 21 besitzt eine Rastkante 16, die zu der Rastnase der Zunge 7 paßt. Die Seitenwände 17 der Führungsrinne 21 verlaufen geneigt zueinander und öffnen sich gegen das Einführungsende der Führungsrinne hin.

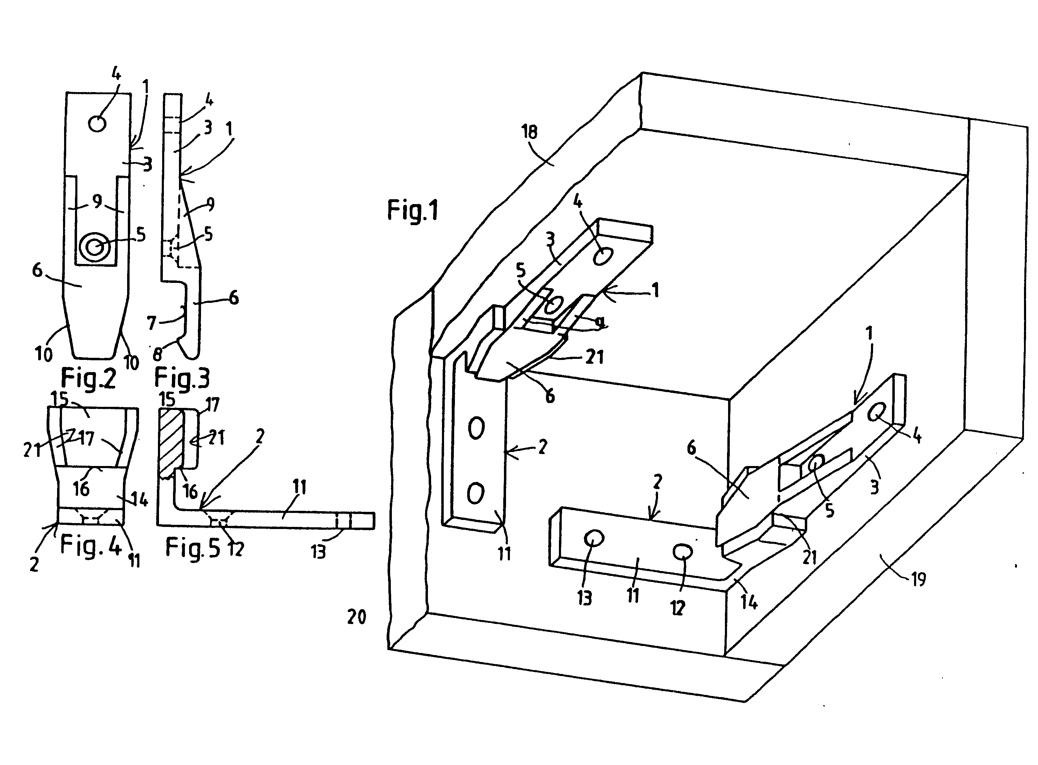

Fig. 1 zeigt die Anwendung des beschriebenen Aufschiebebeschlages. An feststehenden Rahmenteilen, nähmlich horizontalen Wänden 18 bzw. vertikalen Wänden 19, sind jeweils die eine Beschlagteil 1 befestigt, wobei die Zungen 7 gegen die offene Stirnfläche hin gerichtet sind. An einer Blende 20 sind jeweils die anderen Beschlagteile 2 befestigt, wobei die Führungsrinnen 21 auf die Zungen 7 ausgerichtet sind. Nach Montage und Ausrichtung der Beschlagteile wird die Blende 20 auf die offene Stirnseite des Rahmenteils aufgesetzt und eingedrückt. Dabei schnappen die Aufschiebebeschläge ineinander und halten so die Blende fest. Beim Einschnappen tritt jeweils die Fußwandung 15 der Führungsrinne 21 unter die Zunge 7. Dadurch ist an jeden einzelnen Beschlag die Zunge fixiert. Die Rastnase 8 rastet in die Rastkante 16 ein. Infolge der Neigung der Seitenränder 10 und der Seitenwände 17 führen sich die Beschlagteile beim Zusammenfügen. Dadurch wird eine Zentrierung und Fixierung erreicht, so daß men eine genaue Fügung in zwei zueinander und zur Aufschieberichtung senkrechten Richtungen erhält. Die an der Blende oder Frontplatte sitzenden Zungen steifen mit Hilfe der anderen Beschlagteile den Rahmen oder Korpus aus und tragen dadurch zur Stabilisierung desselben bei. Der Aufschiebebeschlag ist auch wieder lösbar, weil die Rastnase 8 ein geneigtes Rastprofil hat. Die Beschlagteile sind als Kunststoffspritzgießteile ausgebildet und haben infolgedessen eine ausreichende Nachgiebigkeit, so daß Toleranzen leicht ausgeglichen und überbrückt werden können.

Der Aufschiebebeschlag nach der Erfindung ist für viele Anwendungen einsetzbar. Es kann sich um Fußblenden an Schränken, Küchenmöbeln oder Verkleidungswänden handeln. Man kann damit auch Blenden in Paneelen, Vorsatzwänden, Schrankwänden und dergleichen ausstatten, ein besonderer Vorteil des Aufschiebebeschlages ist die einfache Anbringbarkeit mithilfe von Holzspanplattenschrauben oder Schrauben mit zylindrischem Schaft. Der Beschlag arbeitet in der beschriebenen Weise selbstzentrierend. Die Blenden sind durch Aufschiebewirkung festgehalten, so daß eine ausreichende Haltekraft erzielt wird.

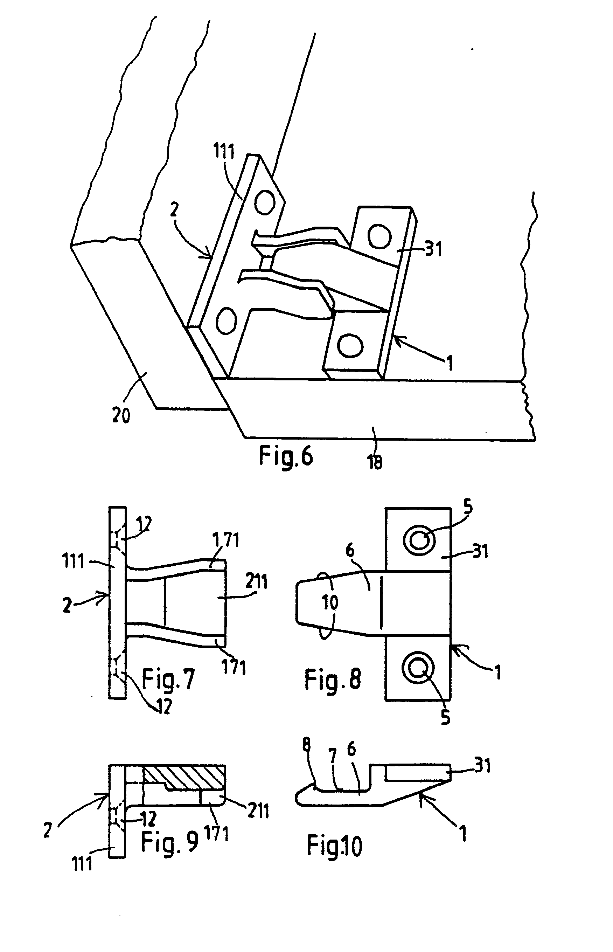

Die Fig. 6 bis 10 zeigen eine weitere Ausführungsform des Aufschiebebeschlages nach der Erfindung. Bei diesem Aufschiebebeschlag ist die Tragplatte 31 des Beschlagteils 1 senkrecht zur Längsrichtung der Zunge 6 ausgerichtet. Die beiden Durchgänge 4 und 5 sind in diesem Fall gleich ausgebildet und können in einer vorgefertigten, genormten Lochreihe einer Bauplatte befestigt werden.

Auch bei dem Beschlagteil 2 ist die Tragplatte 111 senkrecht zur Achse der Führungsrinne 211 angeordnet. Die Seitenwände 171 der Führungsrinne 211 sind bis in die Tragplatte 111 verlängert, so daß man eine höhere Stabilität und Festigkeit dieses Beschlagteils 2 erhält. Wenn die Rahmenplatten und Blendenplatten vorgefertigte Lochreihen aufweisen, so ist diese Ausführungsform des Aufschiebebeschlags nach der Erfindung in der Anwendung einfacher.

## Patentansprüche

1. Aufschiebebeschlag zur Befestigung von Blenden und anderen Vorsatzelementen an Rahmenteilen oder Korpusteilen, wobei an dem Rahmen- oder Korpusteil ein erster Beschlagteil (1) eine an einer Tragplatte (3) angeordnete Zunge (6) mit einer Rastnase (8) in einer Eingriffsfläche (7) und an der Blende oder dem Vorsatzelement ein zweiter Beschlagteil (2) eine ebenfalls an einer Tragplatte (11) angeordnete Führungsrinne (21) mit einer an die Eingriffsfläche (7) des ersten Beschlagteils (1) angepaßten Rastkante (16) aufweist, wobei die Seitenwände (17) der Führungsrinne (21) in Einschubrichtung geneigt zueinander verlaufen und die im Befestigungszustand hieran anliegenden Seitenränder (10) der Zunge (6) eine entsprechende Neigung aufweisen, dadurch gekennzeichnet, daß die Rastkante (16) des zweiten Beschlagteils (2) an der zwischen den Seitenwänden (17) gelegenen Fußwandung (15) der Führungsrinne (21) vorgesehen ist und dadurch die Zunge (6) mit der Fußwandung (15) verrastbar ist, wobei die Rastkante (16) und die Rastnase (8) zur Lösbarkeit der Verbindung ein in Einschubrichtung geneigt verlaufendes Profil aufweisen, und daß die Zunge (6) gegenüber der Befestigungsseite der Tragplatte (3) des ersten Beschlagteils (1) um die Dicke der Fußwandung (15) der Führungsrinne (21) des zweiten Beschlagteils (2) versetzt ist, so daß die Fußwandung der Führungsrinne im Befestigungszustand zwischen der Zunge und dem Rahmenteil gehaltert ist.

2. Aufschiebebeschlag nach Anspruch 1, dadurch gekennzeichnet, daß die Tragplatten (3, 11) der Beschlagteile (1, 2) jeweils in Längsrichtung der Zunge (6) bzw. in Achsrichtung der Führungsrinne (21) vorgesehen sind.

3. Aufschiebebeschlag nach Anspruch 1 oder 2, dadurch gekennzeichnet, daß die Tragplatten (31, 111) der Beschlagteile (1, 2) jeweils quer zur Längsrichtung der Zunge (6) bzw. quer zur Achse der Führungsrinne (21) angeordnet sind.

4. Aufschiebebeschlag nach Anspruch 3, dadurch gekennzeichnet, daß die Seitenwände (171) der Führungsrinne (211) bis zur Tragplatte (111) verlängert sind.

5. Aufschiebebeschlag nach einem der Ansprüche 1 bis 4, dadurch gekennzeichnet, daß die Tragplatten (3, 11) jeweils zwei Durchgänge (4, 5, 12,13) in einem üblichen Rasterabstand aufweisen.

6. Aufschiebebeschlag nach einem der Ansprüche 1 bis 5, dadurch gekennzeichnet, daß die Durchgänge (5, 12) jeweils ein Profil zur Aufnahme eines Versenkkopfes einer Holzspanplattenschraube aufweisen.

## Claims

1. A push-on fitment for fixing screen members and other attachment elements to frame portions or body portions, wherein on the frame or body portion a first fitment portion (1) has a tongue (6) arranged on a carrier plate (3), with a retaining projection (8) in an engagement surface (7), and on the screen member or attachment element, a second fitment portion (2) has a guide channel (21) also arranged on a carrier plate (11), with a retaining edge (16) which matches the engagement surface (7) of the first fitment portion (1), wherein the side walls (17) of the guide channel (21) converge inclinedly in the push-in direction and the side edges (10) of the tongue (6), which lie thereagainst in the fixing condition, are of a corresponding inclination, characterised in that the retaining edge (16) of the second fitment portion (2) is provided on the base wall (15) of the guide channel (21), between the side walls (17), and thereby the tongue (6) can be latched to the base wall (15), wherein the retaining edge (16) and the retaining projection (8), for releasability of the connection, are of a profile which extends inclinedly in the push-in direction, and that the tongue (6) is displaced relative to the fixing side of the carrier plate (3) of the first fitment portion (1) by the thickness of the base wall (15) of the guide channel (21) of the second fitment portion (2) so that the base wall of the guide channel is held between the tongue and the frame portion in the fixing condition.

2. A push-on fitment according to claim 1 characterised in that the carrier plates (3, 11) of the fitment portions (1, 2) are respectively provided in the longitudinal direction of the tongue (6) and in the axial direction of the guide channel (21).

3. A push-on fitment according to claim 1 or claim 2 characterised in that the carrier plates (31, 111) of the fitment portions (1, 2) are respectively arranged transversely with respect to the longitudinal direction of the tongue (6) and transversely with respect to the axis of the guide channel (21).

4. A push-on fitment according to claim 3 characterised in that the side walls (171) of the guide channel (211) are extended as far as the carrier plate (111).

5. A push-on fitment according to one of claims 1 to 4 characterised in that the carrier plates (3, 11) each have two through openings (4, 5, 12, 13) at a normal pattern spacing.

6. A push-on fitment according to one of claims 1 to 5 characterised in that the through openings (5, 12) are each of a configuration for accomodating a countersunk head of a woodchip board screw.

## Revendications

1. Ferrure coulissante pour la fixation d'écrans et d'autres éléments en ressaut sur des parties de châssis ou des parties de corps, dans laquelle, sur la partie de châssis ou de corps, une première partie de ferrure (1) présente une languette (6) qui est agencée sur une plaque de support (3) et qui est pourvue d'une saillie d'encliquetage (8) dans une surface d'engagement (7) et dans laquelle, sur l'écran ou l'élément en ressaut, une deuxième partie de ferrure (2) présente une gorge de guidage (21) qui est agencée également sur une plaque de support (11) et qui est pourvue d'un bord d'encliquetage (16) adapté à la surface d'engagement (7) de la première partie de ferrure (1), les parois latérales (17) de la gorge de guidage (21) s'étendant de manière inclinée l'une vers l'autre dans le sens d'enfoncement et les bords latéraux (10) de la languette (6), qui leur sont adjacents à l'état de fixation, présentant une inclinaison correspondante, caractérisée en ce que le bord d'encliquetage (16) de la deuxième partie de ferrure (2) est prévu sur la paroi de base (15) de la gorge de guidage (21) qui est située entre les parois latérales (17) et en ce qu'ainsi la languette (6) peut être encliquetée avec la paroi de base (15), le bord d'encliquetage (16) et la saillie d'encliquetage (8) présentant un profil qui s'étend de manière inclinée dans le sens d'enfoncement pour permettre le detachement de la liaison, et en ce que la languette (6) est décalée, par rapport au côté de fixation de la plaque de support (3) de la première partie de ferrure (1), de l'épaisseur de la paroi de base (15) de la gorge de guidage (21) de la deuxième partie de ferrure (2), de façon que la paroi de base de la gorge de guidage soit, à l'état de fixation, maintenue entre la languette et la partie de châssis.

2. Ferrure coulissante suivant la revendication 1, caractérisée en ce que les plaques de support (3, 11) des parties de ferrure (1, 2) sont chacune prévues dans la direction longitudinale de la languette (6) ou respectivement dans la direction axiale de la gorge de guidage (21).

3. Ferrure coulissante suivant l'une des revendications 1 et 2, caractérisée en ce que les plaques de support (31, 111) des parties de ferrure (1, 2) sont chacune disposées transversalement à la direction longitudinale de la languette (6) ou respectivement transversalement à l'axe de la gorge de guidage (21).

4. Ferrure coulissante suivant la revendication 3, caractérisée en ce que les parois latérales (171) de la gorge de guidage (211) sont prolongées jusqu'à la plaque de support (111).

5. Ferrure coulissante suivant l'une des revendications 1 à 4, caractérisée en ce que les plaques de support (3, 11) présentent chacune deux passages (4, 5, 12, 13) à une distance de réseau courante.

6. Ferrure coulissante suivant l'une des revendications 1 à 5, caractérisée en ce que les passages (5, 12) présentent chacun un profil pour recevoir une tête conique d'une vis pour panneau de particules.

Fig.1

Fig.2 Fig.3

Fig.4 Fig.5

0171813

Fig.6

Fig.7

Fig.8

Fig. 9

Fig.10